Europäisches Patentamt

European Patent Office

Office européen des brevets

(11) Numéro de publication : **0 511 064 A1**

(19)

(12) # DEMANDE DE BREVET EUROPEEN

(21) Numéro de dépôt : **92401094.5**

(22) Date de dépôt : **17.04.92**

(51) Int. Cl.⁵ : $G01N\ 3/20$, $G01N\ 3/18$

(30) Priorité : **22.04.91 FR 9104921**

(43) Date de publication de la demande :
**28.10.92 Bulletin 92/44**

(84) Etats contractants désignés :
**BE CH DE ES GB IT LI NL**

(71) Demandeur : **AEROSPATIALE Société Nationale Industrielle
37, Boulevard de Montmorency
F-75781 Paris Cédex 16 (FR)**

(72) Inventeur : **Cussac, Michel
Rue du Baou
F-33260 La Teste (FR)**
Inventeur : **Fuchs, Jean-François
211 Allée des Cailles
F-33480 Sainte Helene (FR)**

(74) Mandataire : **Mongrédien, André et al
c/o SOCIETE DE PROTECTION DES
INVENTIONS 25, rue de Ponthieu
F-75008 Paris (FR)**

(54) **Dispositif d'essais d'éprouvettes en flexion dans un milieu ambiant cryogène.**

(57)    Il comprend essentiellement un équipage mobile formé d'une broche (6) à laquelle la pièce de pressage (18) appartient et d'une structure d'appui (7) recourbée en voûte (8) qui porte l'éprouvette (10). Quand une nouvelle éprouvette (10) doit être disposée, la broche (6) est relevée, ce qui retire automatiquement la structure d'appui (7) d'un bac rempli de liquide cryogène. Quand l'éprouvette (10) a été remplacée, la broche (6) est redescendue jusqu'à ce que la structure d'appui (7) touche une butée, puis que l'extrémité (18) fléchisse l'éprouvette (10).

   L'invention s'applique à la caractérisation en flexion des matériaux usuels et notamment des matériaux composites.

FIG. 2

EP 0 511 064 A1

L'invention se rapporte à un dispositif d'essais d'éprouvettes en flexion dans un milieu ambiant cryogène.

Il existe déjà un certain nombre d'appareils qui permettent les essais en flexion d'éprouvettes et qui comprennent essentiellement une structure d'appui de l'éprouvette fixée sur un socle et munie de deux rouleaux sur lesquels les extrémités de l'éprouvette sont posées, et une broche coulissant par rapport à une partie du socle perpendiculairement à l'éprouvette, sur laquelle elle vient presser à mi-distance entre les appuis. Il est alors possible d'effectuer les essais traditionnels de mesure de l'effort à la rupture ou de mesure de la déflexion en fonction de l'effort appliqué sur la broche.

Certains de ces appareils sont complétés par une enceinte autour de l'éprouvette et de la broche, ce qui permet d'éprouver dans des conditions particulières de température, d'atmosphère, etc., mais les essais à très basses températures nécessitent de plonger l'éprouvette dans un liquide cryogène, tel que l'azote liquide, ce qui pose des problèmes inédits dans ce domaine car il devient difficile ou impossible de mesurer la déflexion de l'éprouvette par les méthodes traditionnelles de jauges de contraintes ou de lecture directe car l'emploi de fluide cryogène rend les manipulations du dispositif peu pratiques. Si par exemple on veut effectuer plusieurs essais successifs, il n'est guère question de vider à chaque fois une enceinte du liquide qui la contient pour la remplir à nouveau dès que l'éprouvette est remplacée.

L'objet de l'invention est donc la fourniture d'un dispositif d'essais d'éprouvettes en flexion apte à fonctionner utilement dans les conditions de cryogénie et à effectuer des essais nombreux sans difficultés de manipulation et sans gaspillage de liquide. Ce dispositif comprend : une structure munie d'appuis extrêmes pour une éprouvette ; une broche coulissant par rapport à un socle fixe et perpendiculairement à l'éprouvette posée sur les appuis, la broche comportant une extrémité de pressage de l'éprouvette entre les appuis ; il est caractérisé en ce que : le socle comprend un bac destiné à être rempli de liquide à basse température, au moins un montant érigé ; la structure d'appui de l'éprouvette est mobile par rapport au socle et comprend une voûte ainsi qu'au moins une saillie, les saillies s'étendant au-dessus des montants ; et la broche comprend un épaulement qui s'étend au-dessous de la voûte, la structure pouvant être plongée dans le bac et ôtée du bac. La structure d'appui de l'éprouvette est donc, si on veut résumer l'invention, une pièce mobile qui peut être posée soit sur le socle pendant les essais, soit sur la broche entre les essais, quand celle-ci est soulevée du liquide cryogène. Aucune manipulation de l'éprouvette n'est entreprise quand elle est plongée dans le liquide.

Il est avantageux que la voûte comporte un alésage dans lequel la broche coulisse.

Un moyen approprié de mesure de la flèche de l'éprouvette consiste en une tige qui traverse la broche et s'étend jusque sur l'éprouvette, et au moins une graduation de référence fixée au socle.

Dans une réalisation particulière prévue pour des essais de flexion sur quatre points, dans laquelle l'extrémité de pressage de la broche consiste en un levier lié à la broche par une articulation et muni de deux couteaux de pressage sur l'éprouvette de part et d'autre de l'articulation, le moyen de mesure est modifié en ce que la tige traverse alors l'articulation et l'axe de celle-ci.

Il est souvent préférable de munir la structure d'appui de l'éprouvette d'un moyen de blocage de l'éprouvette sur les appuis afin d'éliminer les risques de déplacement ou de mise en flottement de l'éprouvette dès qu'elle plonge dans le liquide.

L'invention va maintenant être décrite à l'aide des figures suivantes annexées à titre illustratif et non limitatif d'une réalisation de l'invention :

- la figure 1 représente une vue d'ensemble et de face du dispositif ;
- la figure 2 représente plus en détail la broche et la structure porteuse de l'éprouvette ;
- la figure 3 représente une vue de dessus de la broche et de la structure porteuse ;
- et la figure 4 représente un autre poinçon.

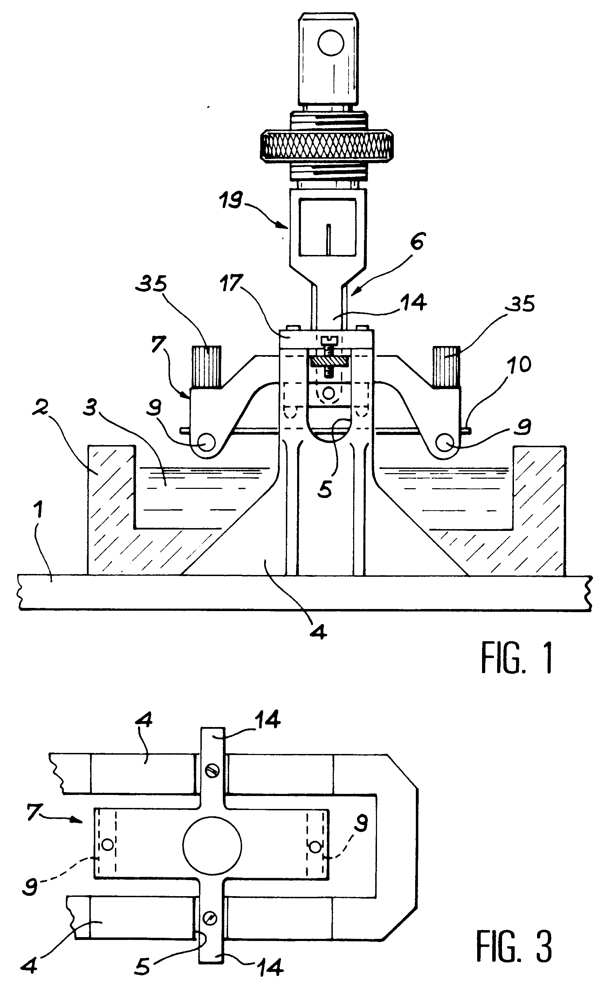

Le dispositif comporte tout d'abord (figure 1) un socle 1 plat sur lequel on a érigé un bac 2 destiné à être rempli de liquide cryogène 3 tel que de l'azote liquide, et des montants 4 sur les côtés longitudinaux du bac 2. Les montants 4, dont un seul apparaît sur la figure 1, sont identiques et comportent chacun une rainure 5 verticale qui les entaille à partir du sommet.

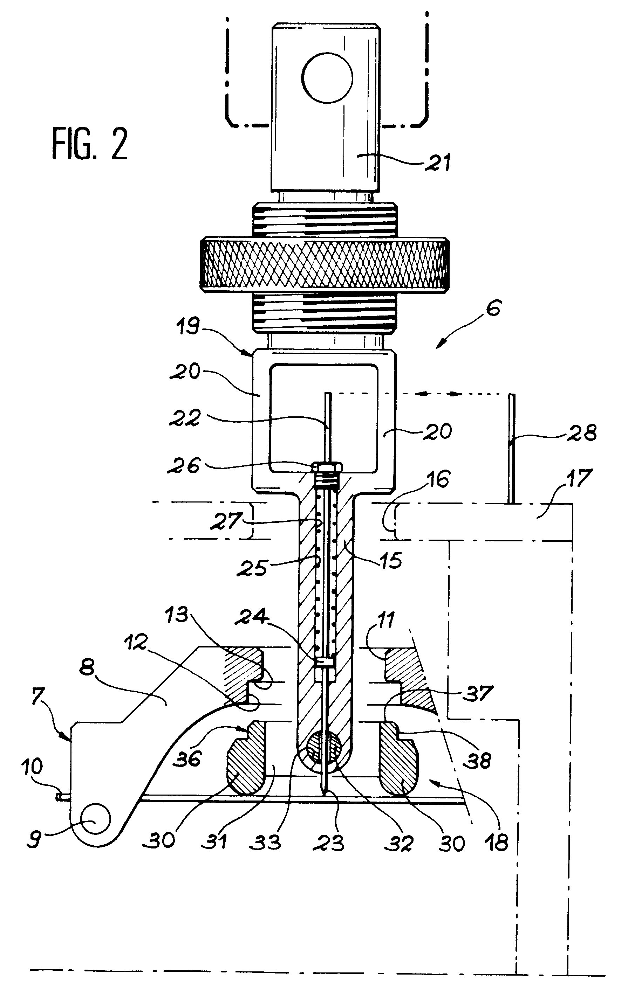

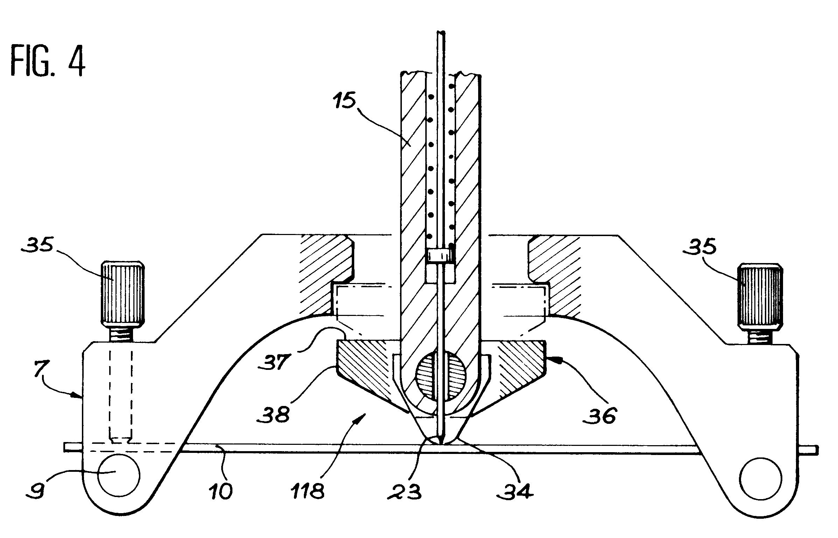

Ces parties stationnaires du dispositif coopèrent avec un ensemble mobile qui se compose essentiellement de deux parties : une broche 6 et une structure d'appui 7. La structure d'appui 7, mieux visible sur la figure 2, comporte pour l'essentiel une voûte 8 dont les extrémités recourbées vers le bas comportent chacune un rouleau 9 sur lequel on pose une des extrémités d'une éprouvette 10 en forme de languette ou de plaquette et qu'il faut soumettre à une flexion. La voûte 8 comporte en son milieu un alésage 11 présentant un élargissement 12 limité par une portée d'épaulement 13. Enfin, on voit sur la figure 3 que la structure d'appui 7 comporte deux saillies 14 horizontales et en extension perpendiculaire à la voûte 8, qui sont en forme d'ailes et pénètrent dans une rainure 5 respective. Les saillies 14 sont situées au sommet de la voûte 8 de sorte qu'elles ne touchent le fond des rainures 5 que quand l'éprouvette 10 baigne dans le liquide cryogène 3. Le rôle essentiel des saillies 14 est de maintenir la structure d'appui 7, et donc l'éprouvette 10, à une position longitudinale constante par rapport au bac 2 et à la broche 6, tout en permettant à la structure d'appui 7 de coulisser verticalement.

La broche 6 est illustrée principalement sur la figure 2. Elle comporte une tige 15 qui s'étend à travers l'alésage 11 et un alésage supérieur 16 ménagé sur un couvercle 17 qui relie le sommet des deux montants 4, une extrémité de pressage 18 inférieure destinée à peser sur l'éprouvette 10, réalisant ainsi l'essai de flexion, une partie élargie 19 composée de deux parois de guidage 20 dans l'alésage supérieur 16 et un embout 21 de fixation à une machine de pressage non représentée en détail et à laquelle le socle 1 est fixé. Un élément particulier de la broche 6 est une tige palpeuse 22 qui s'étend dans un perçage 27 réalisé à travers la tige 15 suivant son axe.

La tige palpeuse 22 est terminée par un pointeau 23 qui est destiné à toucher l'éprouvette 10 et dépasse donc éventuellement de l'extrémité de pressage 18. Elle comprend aussi une collerette 24 sur laquelle un ressort 25 enfilé autour de la partie supérieure de la tige palpeuse 22 est comprimé et excerce une pression qui maintient le pointeau 23 contre l'éprouvette 10. Un écrou percé 26 ferme le sommet du perçage 27 et maintient le ressort 25 comprimé dans le perçage 27 tout en laissant le sommet de la tige palpeuse 22 dépasser ; un repère 28 établi sur le couvercle 17, tel qu'une réglette graduée, permet de suivre et de mesurer les déplacements du sommet de la tige palpeuse 22.

L'extrémité de pressage 18 illustrée aux figures 1 et 2 est une pièce rapportée destinée à soumettre l'éprouvette 10 à une flexion sur quatre points. Elle se compose de deux couteaux 30 qui offrent un contact linéaire sur la largeur de l'éprouvette 10, dans la direction des rouleaux 9, et d'un levier 31 qui réunit les couteaux 30 et qui tourne autour d'un axe 32 enfoncé dans un évidement 33 de la tige 15. Cette liaison permet à l'extrémité de pressage 18 de basculer pour reposer toujours sur l'éprouvette 10 par les deux couteaux 30 situés de part et d'autre de l'axe 32. Il est cependant nécessaire que l'axe 32 soit évidé, tout comme la tige 15, pour laisser le passage à la tige palpeuse 22. L'éprouvette 10 est fléchie dans des conditions qui dépendent des emplacements des couteaux 30 et des rouleaux 9. Si ces emplacements sont symétriques, des sollicitations de flexion pure sont produites entre les couteaux 30.

Si cependant on se contente d'une flexion sur trois points, c'est-à-dire sur les rouleaux 9 et un point de pressage intermédiaire, l'extrémité de pressage 18 est remplacée par une extrémité de pressage 118 comportant un couteau 34 unique dans le prolongement de la tige 15. Cette extrémité de pressage 118 (illustrée à la figue 4) est fixée rigidement à la tige 15.

Aussi bien l'extrémité 18 que l'extrémité 118 comporte un épaulement supérieur 36 dont la face supérieure 37 est destinée à s'appuyer sur la portée d'épaulement 13, ainsi qu'une surface cylindrique 38 prévue pour coulisser dans l'élargissement 12.

Enfin, on remarque deux vis 35 engagées dans la voûte 8 au-dessus des rouleaux 9. Il s'agit de vis de fixation qui pressent les extrémités de l'éprouvette 10 sur les rouleaux 9 et empêchent donc de la retirer de la structure d'appui 7.

Quand un cycle d'essais est entrepris, la broche 6 est soulevée, ainsi que la structure d'appui 7 une fois que la portée d'épaulement 13 repose sur la face supérieure 37 de l'extrémité de pressage 18 ou 118. L'azote liquide présent est alors éventuellement renouvelé ou complété. Une nouvelle éprouvette 10 est glissée sur les rouleaux 9.

On redescend alors progressivement la broche 6 au moyen de la machine de pressage, à partir de l'embout 21. L'éprouvette 10 plonge dans l'azote liquide, puis les saillies 14 touchent le fond des rainures 5, après quoi la structure d'appui 7 n'est plus posée sur la broche 6 et reste immobile. Il est alors possible de relâcher sans inconvénient les vis 35 pour libérer les extrémités de l'éprouvette 10. Si l'éprouvette 10 avait été simplement posée sur les rouleaux 9 pendant sa plongée dans l'azote liquide 3, elle aurait pu être déplacée par le ressac et le bouillonnement de celui-ci. La descente de la broche 6 continue cependant jusqu'à ce que les couteaux 30 ou 34 touchent la face supérieure de l'éprouvette 10. On se trouve alors au moment de l'étalonnage de l'appareil, correspondant à une déflexion nulle de l'éprouvette 10 et à une force appliquée également nulle. Tout déplacement supplémentaire de la broche 6 vers le bas provoque une flexion de l'éprouvette 70. L'effort appliqué est mesuré directement par la machine et la déflexion par l'appareil constitué du repère 28 et de la tige palpeuse 22. Les parois de guidage 20 coulissent alors dans l'alésage supérieur 16, garantissant ainsi le centrage de la broche 6 et de l'éprouvette 10 en combinaison avec les saillies 14 et les rainures 5 puisque ces derniers et l'alésage supérieur 16 font partie du même ensemble. Quand l'éprouvette 10 doit être remplacée, la broche 6 est relevée jusqu'à soulever puis sortir de l'azote liquide 3 la totalité de la structure d'appui 7. Une nouvelle éprouvette 10 est alors installée à la place de l'ancienne et l'essai est recommencé .

Les éprouvettes 10 peuvent être notamment des éprouvettes en matériaux composites.

## Revendications

1. Dispositif d'essais d'éprouvettes en flexion comprenant une structure (7) d'appuis extrêmes (9) pour une éprouvette (10), une broche (6) coulissant par rapport à un socle fixe (1) et perpendiculairement à l'éprouvette (10) posée sur les appuis (9), la broche (6) comportant une extrémité de pressage (18, 118) de l'éprouvette (10) entre les appuis (9), caractérisé en ce que le socle (1) comprend un bac (2) destiné à être rempli de liquide à basse température, au moins un montant (4) érigé, la structure d'appui (7) de l'éprouvette (10) est mobile par rapport au socle (1) et comprend une voûte (8) ainsi qu'au moins une saillie (14), les saillies (14) s'étendant au-dessus des montants (4), et la broche (6) comprend un épaulement (36) qui s'étend au-dessous de la voûte (8), la structure d'appui (7) pouvant être plongée dans le bac (2) et ôtée du bac (2).

2. Dispositif d'essais selon la revendication 1, caractérisé en ce que la voûte (8) comporte un alésage (16) dans lequel la broche (6) coulisse.

3. Disposiif d'essais selon l'une quelconque des revendications 1 ou 2, caractérisé en ce qu'il comporte un moyen de mesure (22, 28) de la flèche de l'éprouvette (10).

4. Dispositif d'essais selon la revendication 3, caractérisé en ce que le moyen de mesure de la flèche de l'éprouvette est une tige (22) qui traverse la broche (6) et s'étend jusque sur l'éprouvette (10), et au moins une graduation de référence (28) fixée au socle (1).

5. Dispositif d'essais selon l'une quelconque des revendications 1 à 4, caractérisé en ce que l'extrémité de pressage de la broche consiste en un levier (31) lié à la broche (6) par une articulation (32) et muni de deux couteaux de pressage (30) sur l'éprouvette (10) de part et d'autre de l'articulation (32).

6. Dispositif d'essais selon les revendications 4 et 5, caractérisé en ce que la tige (22) traverse l'articulation (32).

7. Dispositif d'essais selon l'une quelconque des revendications 1 à 6, caractérisé en ce que la structure d'appui (7) de l'éprouvette (10) comporte un moyen de blocage (35) de l'éprouvette (10) sur les appuis (9).

8. Dispositif d'essais selon l'une quelconque des revendications 1 à 7, caractérisé en ce que les montants (4) comportent des rainures (5) dans lesquelles les saillies (14) coulissent.

9. Dispositif d'essais selon l'une quelconque des revendications 1 à 8, caractérisé en ce qu'il comprend des moyens (5, 14, 16, 20) de centrage de la broche (6) sur l'éprouvette (10).

FIG. 1

FIG. 3

FIG. 2

FIG. 4

Office européen
des brevets

**RAPPORT DE RECHERCHE EUROPEENNE**

Numero de la demande

EP   92 40 1094
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 504 985 (D.H.KALLAS ET AL.) <br> * colonne 1, ligne 1 - colonne 2, ligne 9; figures 1,2 * <br> * colonne 2, ligne 44 - ligne 55 * <br> * colonne 3, ligne 37 - ligne 58 * <br> --- | 1,2 | G01N3/20 <br> G01N3/18 |
| A | PATENT ABSTRACTS OF JAPAN <br> vol. 13, no. 149 (P-855)(3497) 12 Avril 1989 <br> & JP-A-63 311 143 ( MATSUSHITA ELECTRIC WORKS LTD ) <br> * abrégé * <br> --- | 1 | |
| A | TRANSACTIONS OF THE AMERICAN SOCIETY OF MECHANICAL ENGINEERS. <br> vol. 96, no. 4, Octobre 1974, NEW YORK US <br> pages 330 - 334; <br> R.J.PODLASEK ET AL.: 'predicting the fracture initiation transition temperature with the COD test' <br> * page 331; figure 3 * <br> --- | 1 | |
| A | US-A-4 976 152 (K.MCKINLEY) <br> * colonne 2, ligne 26 - ligne 34; figures 1,2 * <br> --- | 1,2 | **DOMAINES TECHNIQUES RECHERCHES (Int. Cl.5)** <br><br> G01N |
| A | US-A-3 158 021 (E.O.WALTERS ET AL.) <br> * colonne 2, ligne 34 - ligne 46; figure 1 * <br> --- | 5 | |
| A | DE-A-2 638 006 (MOTOREN- UND TURBINEN-UNION MUNCHEN GMBH) <br> * page 9, ligne 2 - ligne 6; figure 1 * <br> --- | 4 | |
| A | DE-A-2 533 373 (SIEMENS AG) <br> * page 4, ligne 26 - page 5, ligne 11 * <br> --- | | |
| A | PATENT ABSTRACTS OF JAPAN <br> vol. 10, no. 341 (P-517)(2397) 18 Novembre 1986 <br> & JP-A-61 142 440 ( SHIMADZU CORP ) <br> * abrégé * <br> --- <br> -/-- | | |

Le présent rapport a été établi pour toutes les revendications

| Lieu de la recherche | Date d'achèvement de la recherche | Examinateur |
|---|---|---|
| LA HAYE | 29 JUILLET 1992 | HOCQUET A.P. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EP O FORM 1503 03.82 (P0402)

Office européen
des brevets

**RAPPORT DE RECHERCHE EUROPEENNE**

Numero de la demande

EP    92 40 1094
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | INDUSTRIAL LABORATORY, vol. 43, no. 9, Septembre 1977, NEW YORK US pages 1309 - 1310; G.G.MAKSIMOVITCH ET AL: 'micromachine for low-frequency fatigue testing' | | |

----

**DOMAINES TECHNIQUES RECHERCHES (Int. Cl.5 )**

Le présent rapport a été établi pour toutes les revendications

| Lieu de la recherche | Date d'achèvement de la recherche | Examinateur |
|---|---|---|
| LA HAYE | 29 JUILLET 1992 | HOCQUET A. P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant